# EUROPEAN PATENT SPECIFICATION

(11) **EP 2 946 873 B1**
(45) Date of publication and mention of the grant of the patent: **11.03.2020**
(21) Application number: 15151725.7
(22) Date of filing: 20.01.2015
(51) Int. Cl.: B23Q 1/76, B23Q 11/00

(54) **VIBRATION STOP DEVICE**
SCHWINGUNGSSTOPPVORRICHTUNG
DISPOSITIF D'ARRÊT DE VIBRATION

(30) Priority: 19.05.2014 JP 2014103625
(43) Date of publication of application: 25.11.2015
(73) Proprietor: Matsuura Machinery Corporation, Fukui City, Fukui (JP)
(72) Inventor: Amaya, Kouichi, Fukui City, Fukui (JP); Iizuka, Syuji, Fukui City, Fukui (JP); Iwai, Kiyotaka, Fukui City, Fukui (JP)
(74) Representative: Sloboshanin, Sergej

(56) References cited:
- EP-A1- 0 500 405
- EP-A1- 2 711 124
- DE-A1- 1 477 265
- US-A- 4 276 723
- US-A- 4 462 442
- US-A- 4 967 579
- US-A- 5 974 920

## Description

### TECHNICAL FIELD

The present invention relates to a system comprising a columnar workpiece, a vibration stop device necessary for stopping vibration of the workpiece in a process stage and an oil pressure supplying device with a hydraulic cylinder.

### BACKGROUD OF THE INVENTION

Accurate processing on a workpiece in a process stage requires the workpiece to be prevented from vibrating.

The workpiece is divided into a processing region and a non-processing region along a circumferential direction, and in many cases moves together with a main shaft in a state where a holding part for vibration stop is in pressure contact with an already processed region of the workpiece.

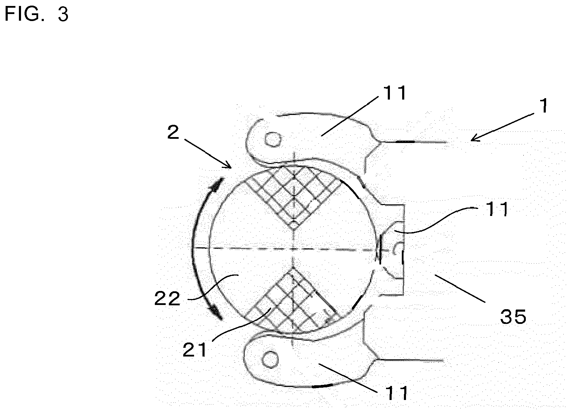

As shown in FIG. 3, in the pressure contact state of a prior art holding part, a pressure contact region is too small. Thus, it cannot be avoided that a partial region of the holding part comes into pressure contact.

On the other hand, the pressure contact state causes the problem that the pressure contact region of the holding part intrudes into a region recessed by the processing, in other words, into a recess, and when the workpiece is to be rotated along a columnar center axis for the next processing step, such a rotation is hindered due to the intrusion.

However, in the prior art, no particular countermeasure has been taken against the problem caused by the pressure contact region of the holding part intruding into the recesses formed by the processing.

For example, JP 2005-169530 A describes, in connection with a camshaft workpiece to be ground, a processing region and a vibration stop for the workpiece; nevertheless there is no particular description of the relationship between the processing region and the vibration stop.

As another example, JP 2010-99746 A describes both processing on a workpiece and a vibration stop device, but does not describe the problem arising when the pressure contact region comes into contact with the region that has already been processed.

Still further, from US 4 967 579 A (representing the closest prior art), US 4 276 723 A and EP 2 711 124 A1 guiding devices for supporting cylindrical workpieces are known. The guiding devices comprise a plurality of adjustable guide shoes, which are arranged to hold the workpiece on its outer surface along a circumferential direction. In particular, US 4 967 579 A discloses a vibration stop device for stopping vibration of a rotatable columnar workpiece comprising: a vibration stop device, wherein three holding parts for vibration stop hold an outer circumferential surface of a columnar workpiece in a process stage under a pressure contact state with pressure supplied from a hydraulic cylinder, and wherein a pressure contact position on the outer circumferential surface is changed by rotation of the workpiece, wherein an angular range formed by both ends of each of the holding parts for vibration stop is larger than an angular range of a processing region regarding an angular range based on a position of an axis of rotation of the columnar workpiece.

### SUMMARY OF THE INVENTION

### Problems to be Solved by the Invention

An object of the present invention is to provide a configuration of a vibration stop device that can prevent the problem caused by a pressure contact region of a holding part of the vibration stop device intruding into a recess of a region that has been processed.

### Effect of the Invention

To achieve the object, the present invention has the following basic structures (1) and (2) as defined in claims 1 and 2 respectively:
(1) A system comprising: a columnar workpiece being divided, along a circumferential direction, into a processing region formed into a state of a recess and a non-processing region having its own radius in a process stage, a hydraulic cylinder, and a vibration stop device for stopping vibration of the rotatable columnar workpiece during workpiece processing, the vibration stop device comprising: a pair of holding parts for vibration stop which are arranged and configured to contact and hold an outer circumferential surface of the rotatable columnar workpiece during a processing stage under a pressure contact state with pressure supplied from the hydraulic cylinder, wherein each of the pair of holding parts is designed to have a surface on a pressure contact side which covers an angular range that is larger than an angular range of the processing region of the workpiece, such that the holding parts for vibration stop contact with both sides of the non-processing regions forming four pressure contact regions, and wherein the holding parts for the vibration stop device each have an arc shaped surface on the pressure contact side, wherein the arc shaped surface is designed to have a radius of curvature equal to the radius of the non-processing region of the columnar workpiece.
(2) A system comprising: a columnar workpiece being divided, along a circumferential direction, into a processing region formed into a state of a recess and a non-processing region having its own radius in a process stage, a hydraulic cylinder, and a vibration stop device for stopping vibration of the rotatable columnar workpiece during workpiece processing, the vibration stop device comprising: three holding parts for vibration stop which are arranged and configured to contact and hold an outer circumferential surface of the rotatable columnar workpiece during a processing stage under a pressure contact state with pressure supplied from the hydraulic cylinder, wherein each holding part is independently interlocked with the hydraulic cylinder, and each holding part is designed to approach and separate to and from the workpiece upon changing oil pressure, and wherein each of the three holding parts is designed to have a surface on a pressure contact side which covers an angular range that is larger than an angular range of the processing region of the workpiece, such that the holding parts for vibration stop contact with both sides of the non-processing regions forming four pressure contact regions, and wherein the holding parts for vibration stop each have an arc shaped surface on the pressure contact side, wherein the arc shaped surface is designed to have a radius of curvature equal to the radius of the non-processing region of the columnar workpiece.

In the present invention according to the basic structure (1) and the basic structure (2), the pressure contact region of the holding part of the vibration stop device never intrudes into the recess in the processing region, and thus the problem in the rotation of the workpiece due to the intrusion can be prevented.

Moreover, in the basic structure (2) described later, the position of the holding parts can be independently adjusted, whereby a precision error of the workpiece can be easily corrected.

### BRIEF DESCRIPTION OF DRAWINGS

FIG. 1 is a side cross-sectional view of the basic structure (1).
FIG. 2 is a side cross-sectional view of the basic structure (2).
FIG. 3 is a side cross-sectional view of a configuration of a prior art vibration stop device.

### DETAILED DESCRIPTION

As described in the basic structure (1) and the basic structure (2), the present invention has a feature that, regarding an angular range based on a position of an axis of rotation of a columnar workpiece 2, an angular range formed by both ends of each of a holding part for vibration stop 11 is larger than an angular range of a processing region 21.

The basic structure (1) and the basic structure (2) can be embodied in a number of ways.

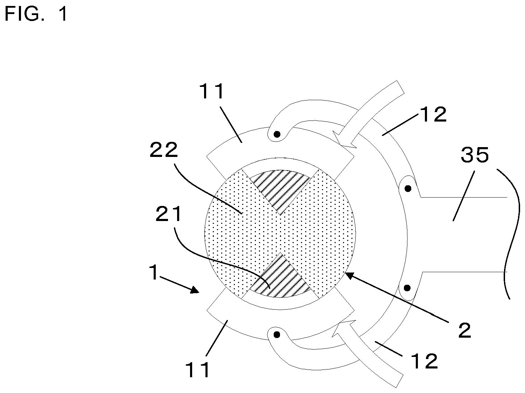

FIG. 1 shows the basic structure (1) having a feature that a holding part has an arc-shaped surface on the pressure contact side, and a radius of curvature of the arc is the same as the radius of the workpiece 2.

In the basic structure (1), pressure contact can be effected mainly at a non-processing region 22.

In the basic structure (1), a holding part for vibration stop 11 never intrudes into a recess of the processing region 21 that has already been processed.

As shown in FIG. 1, a pair of the holding parts for vibration stop 11 comes into pressure contact with both sides of the workpiece 2, and the two sides of the workpiece 2 are rotatably connected to the pair of the holding parts for vibration stop 11, and a pressure transmission part 12 which is interlocked with a single hydraulic cylinder 31 is provided, such that approaching and separating of the holding parts for vibration stop 11 to and from the workpiece 2 are achieved by changing oil pressure.

In the basic structure (1), even when the entire processing region 21 is formed into the recess as shown in FIG. 1, the holding parts for vibration stop 11 are in pressure contact with both sides of the non-processing regions 22 and at least four pressure contact regions are formed. Thus, unlike in the conventional technique shown in FIG. 5, a holding part for vibration stop 11 for directly transmitting the oil pressure from the hydraulic cylinder 31 is not required to be provided in addition to the holding parts for vibration stop 11 for sandwiching the workpiece 2 from both sides.

However, the basic structure (1) requires the holding parts for vibration stop 11 having radii of curvature respectively corresponding to the various radii of the workpieces 2.

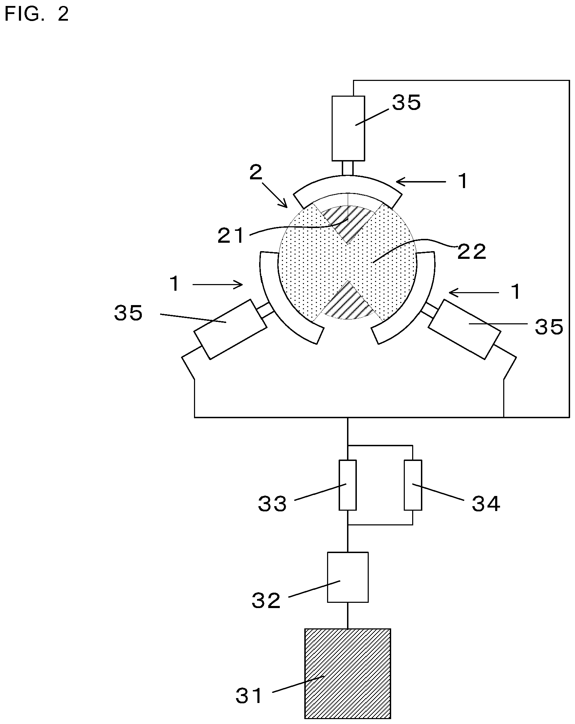

As shown in FIG. 2, the basic structure (2) has a feature that three holding parts for vibration stop 11 are each independently interlocked with a hydraulic cylinder 31, and approaching and separating of the holding parts for vibration stop 11 to and from the workpiece 2 are achieved by changing oil pressure.

When a precision error occurs in the workpiece 2, the pressure contact state created by a vibration stop device needs to be immediately released, and the processing region 21 where the precision error has occurred needs to be rotated to an operation position on a main shaft side.

In such a case, the conventional technique shown in FIG. 3 and the basic structure (1) shown in FIG. 1 require cumbersome control such as an operation of the pressure transmission part 12, and movement of the third holding part for vibration stop 11.

In the basic structure (2), the rotation state can be achieved by immediately releasing, from each of the holding parts for vibration stop 11, pressure supplied from the hydraulic cylinder 31, and the precision error can be quickly corrected.
An example is described as follows:

### Example

As shown in FIG. 2, the example has a feature that a relief valve 34 is provided in juxtaposition with the solenoid valve 33 which supplies the oil pressure to the vibration stop device in a hydraulic circuit that creates the pressure contact state.

Specifically, a hydraulic cylinder 31, a pressure reducing valve 32 for adjusting the pressure, and the solenoid valve 33 for turning ON and OFF transmission of reduced pressure are used as in the conventional technique, and the relief valve 34 in parallel with an oil pressure circuit is further provided.

In the example described above, even if the vibrating state of the workpiece 2 is changed and consequently the amount of pressure required for the pressure contact of the holding part for vibration stop 11 changes by turning ON the relief valve 34, the change in the pressure can be compensated by the relief valve 34 turning ON, so that the pressure transmitted to the hydraulic cylinder 31 can be reduced as much as possible.

### APPLICABILITY OF THE INVENTION

Thus, the present invention can achieve the vibration stop without the problem of intrusion into the recess of the processing region, and can quickly correct the precision error, and thus is extremely useful.

### LIST OF REFERENCE NUMERALS

- 1: vibration stop device
- 11: holding part for vibration stop
- 12: pressure transmission part
- 2: workpiece
- 21: processing region
- 22: non-processing region
- 3: oil pressure transmission device
- 31: hydraulic cylinder
- 32: pressure reducing valve
- 33: solenoid valve
- 34: relief valve
- 35: oil pressure supply part

## Claims

1. A system comprising:
a columnar workpiece (2) being divided, along a circumferential direction, into a processing region (21) formed into a state of a recess and a non-processing region (22) having a radius in a process stage,
a hydraulic cylinder, and
a vibration stop device (1) for stopping vibration of the rotatable columnar workpiece (2) during workpiece processing, comprising:
a pair of holding parts for vibration stop (11) which are arranged and configured to contact and hold an outer circumferential surface of the rotatable columnar workpiece (2) during a processing stage under a pressure contact state with pressure supplied from the hydraulic cylinder, wherein each of the pair of holding parts (11) is designed to have a surface on a pressure contact side which covers an angular range that is larger than an angular range of the processing region (21) of the workpiece (2), such that the holding parts for vibration stop (11) contact with both sides of the non-processing regions forming four pressure contact regions, and wherein the holding parts for vibration stop (11) each have an arc shaped surface on the pressure contact side, wherein the arc shaped surface is designed to have a radius of curvature equal to the radius of the non-processing region (22) of the columnar workpiece (2).

2. A system comprising:
a columnar workpiece (2) being divided, along a circumferential direction, into a processing region (21) formed into a state of a recess and a non-processing region (22) having a radius in a process stage,
a hydraulic cylinder, and
a vibration stop device (1) for stopping vibration of the rotatable columnar workpiece (2) during workpiece processing, comprising:
three holding parts for vibration stop (11) which are arranged and configured to contact and hold an outer circumferential surface of the rotatable columnar workpiece (2) during a processing stage under a pressure contact state with pressure supplied from the hydraulic cylinder, wherein each holding part (11) is independently interlocked with the hydraulic cylinder, and each holding part (11) is designed to approach and separate to and from the workpiece (2) upon changing oil pressure, and wherein each of the three holding parts (11) is designed to have a surface on a pressure contact side which covers an angular range that is larger than an angular range of the processing region (21) of the workpiece (2), such that the holding parts for vibration stop (11) contact with both sides of the non-processing regions forming four pressure contact regions, and wherein the holding parts for vibration stop (11) each have an arc shaped surface on the pressure contact side, wherein the arc shaped surface is designed to have a radius of curvature equal to the radius of the non-processing region (22) of the columnar workpiece (2).

3. The system according to claim 1, wherein the two sides of the workpiece (2) are rotatably connected to the pair of the holding parts for vibration stop (11), and a pressure transmission part (12) which is interlocked with the hydraulic cylinder and which is arranged to approach and separate the holding parts for vibration stop (11) to and from the workpiece (2) upon changing oil pressure.

4. The system according to claims 1 to 3, wherein the vibration stop device (1) is connectable to a hydraulic circuit for supplying pressure to achieve the pressure contact, the hydraulic circuit comprising the relief valve (34) and the solenoid valve (33), wherein the relief valve (34) is provided in juxtaposition with the solenoid valve (33) for supplying oil pressure to the vibration stop device (1).

## Patentansprüche

1. System umfassend:
ein säulenartiges Werkstück (2), das entlang einer Umfangsrichtung in einen Bearbeitungsbereich (21), der in einen Zustand einer Aussparung gebildet ist, und einen Nichtbearbeitungsbereich (22) aufgeteilt ist, der in einem Bearbeitungsstadium einen Radius aufweist,
einen Hydraulikzylinder, und
eine Vibrationsstoppvorrichtung (1) zum Stoppen einer Vibration des drehbaren säulenartigen Werkstücks (2) während einer Werkstückbearbeitung, umfassend:
ein Paar von Halteteilen für einen Vibrationsstopp (11), die dazu angeordnet und konfiguriert sind, eine Außenumfangsoberfläche des drehbaren säulenartigen Werkstücks (2) während eines Bearbeitungsstadiums mit von dem Hydraulikzylinder zugeführtem Druck unter einem Druckkontaktzustand zu kontaktieren und zu halten, wobei jedes des Paars von Halteteilen (11) dazu ausgebildet ist, eine Oberfläche an einer Druckkontaktseite aufzuweisen, die einen Winkelbereich abdeckt, der größer als ein Winkelbereich des Bearbeitungsbereichs (21) des Werkstücks (2) ist, so dass die Halteteile für einen Vibrationsstopp (11) mit beiden Seiten der Nichtbearbeitungsbereiche in Kontakt sind, wobei sie vier Druckkontaktbereiche bilden, und wobei die Halteteile für einen Vibrationsstopp (11) jeweils eine bogenförmige Oberfläche an der Druckkontaktseite aufweisen, wobei die bogenförmige Oberfläche dazu ausgebildet ist, einen Krümmungsradius aufzuweisen, der gleich dem Radius des Nichtbearbeitungsbereichs (22) des säulenartigen Werkstücks (2) ist.

2. System umfassend:
ein säulenartiges Werkstück (2), das entlang einer Umfangsrichtung in einen Bearbeitungsbereich (21), der in einen Zustand einer Aussparung gebildet ist, und einen Nichtbearbeitungsbereich (22) aufgeteilt ist, der in einem Bearbeitungsstadium einen Radius aufweist,
einen Hydraulikzylinder, und
eine Vibrationsstoppvorrichtung (1) zum Stoppen einer Vibration des drehbaren säulenartigen Werkstücks (2) während einer Werkstückbearbeitung, umfassend:
drei Halteteile für einen Vibrationsstopp (11), die dazu angeordnet und konfiguriert sind, eine Außenumfangsoberfläche des drehbaren säulenartigen Werkstücks (2) während eines Bearbeitungsstadiums mit von dem Hydraulikzylinder zugeführtem Druck unter einem Druckkontaktzustand zu kontaktieren und zu halten, wobei jedes Halteteil (11) unabhängig mit dem Hydraulikzylinder verbunden ist, und jedes Halteteil (11) dazu ausgebildet ist, sich nach Ändern eines Öldrucks an das Werkstück (2) anzunähern und von diesem zu trennen, und wobei jedes der drei Halteteile (11) dazu ausgebildet ist, eine Oberfläche an einer Druckkontaktseite aufzuweisen, die einen Winkelbereich abdeckt, der größer als ein Winkelbereich des Bearbeitungsbereichs (21) des Werkstücks (2) ist, so dass die Halteteile für einen Vibrationsstopp (11) mit beiden Seiten der Nichtbearbeitungsbereiche in Kontakt sind, wobei sie vier Druckkontaktbereiche bilden, und wobei die Halteteile für einen Vibrationsstopp (11) jeweils eine bogenförmige Oberfläche an der Druckkontaktseite aufweisen, wobei die bogenförmige Oberfläche dazu ausgebildet ist, einen Krümmungsradius aufzuweisen, der gleich dem Radius des Nichtbearbeitungsbereichs (22) des säulenartigen Werkstücks (2) ist.

3. System nach Anspruch 1, wobei die zwei Seiten des Werkstücks (2) drehbar mit dem Paar der Halteteile für einen Vibrationsstopp (11) verbunden sind, und ein Druckübertragungsteil (12) vorgesehen ist, das mit dem Hydraulikzylinder verbunden ist und das dazu angeordnet ist, nach Ändern eines Öldrucks die Halteteile für einen Vibrationsstopp (11) an das Werkstück (2) anzunähern und von diesem zu trennen.

4. System nach den Ansprüchen 1 bis 3, wobei die Vibrationsstoppvorrichtung (1) mit einem Hydraulikkreis zum Zuführen von Druck verbindbar ist, um den Druckkontakt zu erreichen, wobei der Hydraulikkreis ein Entlastungsventil (34) und ein Magnetventil (33) umfasst, wobei das Entlastungsventil (34) in nebeneinanderliegender Position mit dem Magnetventil (33) vorgesehen ist, um der Vibrationsstoppvorrichtung (1) Öldruck zuzuführen.

## Revendications

1. Système comprenant :
une pièce à travailler en colonnes (2) divisée, le long d'une direction circonférentielle, en une région de traitement (21) formée dans un état d'une cavité et une région sans traitement (22) présentant un rayon dans une phase de traitement,
un cylindre hydraulique, et
un dispositif d'arrêt de vibration (1) permettant d'arrêter les vibrations de la pièce à travailler en colonnes rotative (2) pendant le traitement de la pièce à travailler, comprenant :
une paire de pièces de maintien permettant d'arrêter les vibrations (11) qui sont agencées et configurées de manière à entrer en contact avec une surface circonférentielle extérieure de la pièce à travailler en colonnes rotative (2) et à la maintenir pendant une phase de traitement dans un état de contact sous pression avec une pression fournie par le cylindre hydraulique, dans lequel chacune de la paire de pièces de maintien (11) est conçue afin de présenter une surface sur un côté de contact par pression qui recouvre une plage angulaire supérieure à une plage angulaire de la région de traitement (21) de la pièce à travailler (2), de sorte que les pièces de maintien permettant d'arrêter les vibrations (11) entrent en contact avec les deux côtés des régions sans traitement formant ainsi quatre régions de contact par pression, et dans lequel les pièces de maintien permettant d'arrêter les vibrations (11) présentent chacune une surface de forme arquée sur le côté de contact par pression, dans lequel la surface de forme arquée est conçue afin de présenter un rayon de courbure égal au rayon de la région sans traitement (22) de la pièce à travailler en colonnes (2).

2. Système comprenant :
une pièce à travailler en colonne (2) divisée, le long d'une direction circonférentielle, en une région de traitement (21) formée dans un état d'une cavité et une région sans traitement (22) présentant un rayon dans une phase de traitement,
un cylindre hydraulique, et
un dispositif d'arrêt de vibration (1) permettant d'arrêter les vibrations de la pièce à travailler en colonnes rotative (2) pendant le traitement de la pièce à travailler, comprenant :
trois pièces de maintien permettant d'arrêter les vibrations (11) qui sont agencées et configurées de manière à entrer en contact avec une surface circonférentielle extérieure de la pièce à travailler en colonnes rotative (2) et à la maintenir pendant une phase de traitement dans un état de contact sous pression avec une pression fournie par le cylindre hydraulique, dans lequel chaque pièce de maintien (11) est indépendamment interverrouillée avec le cylindre hydraulique, et chaque pièce de maintien (11) est conçue afin de s'approcher et de se séparer de la pièce à travailler (2) lors du changement de pression d'huile, et dans lequel chacune des trois pièces de maintien (11) est conçue afin de présenter une surface sur le côté de contact par pression qui recouvre une plage angulaire supérieure à une plage angulaire de la région de traitement (21) de la pièce à travailler (2), de sorte que les pièces de maintien permettant l'arrêt de vibration (11) entrent en contact avec les deux côtés des régions sans traitement, formant ainsi quatre régions de contact par pression, et dans lequel les pièces de maintien permettant l'arrêt de vibration (11) présentent chacune une surface de forme arquée sur le côté de contact par pression, dans lequel la surface de forme arquée est conçue afin de présenter un rayon de courbure égal au rayon de la région sans traitement (22) de la pièce à travailler en colonnes (2).

3. Système selon la revendication 1, dans lequel les deux côtés de la pièce à travailler (2) sont raccordées en rotation à la paire de pièces de maintien permettant d'arrêter les vibrations (11) et une pièce de transmission de pression (12) qui est interverrouillée avec le cylindre hydraulique et qui est agencée de manière à approcher et à séparer les pièces de maintien permettant d'arrêter les vibrations (11) de la pièce à travailler (2) lors du changement de pression d'huile.

4. Système selon les revendications 1 à 3, dans lequel le dispositif d'arrêt de vibration (1) peut être raccordé à un circuit hydraulique afin d'alimenter la pression afin d'obtenir le contact par pression, le circuit hydraulique comprenant le clapet de surpression (34) et l'électrovanne (33), dans lequel le clapet de surpression (34) est ménagé en juxtaposition avec l'électrovanne (33) afin d'alimenter la pression d'huile au dispositif d'arrêt de vibration (1).
